# EUROPEAN PATENT APPLICATION

(11) **EP 2 426 063 A1**
(43) Date of publication of application: **07.03.2012**
(21) Application number: 11179247.9
(22) Date of filing: 30.08.2011
(51) Int. Cl.: B65D 75/32, B65D 43/02

(54) **Clamshell package with snap fit closure and method of forming same**

(30) Priority: 30.08.2010 US 378230 P; 29.08.2011 US 219941
(71) Applicant: C P Packaging, LLC, Appleton, WI 54914 (US)
(72) Inventor: Buchko, Raymond G., Neenah, WI Wisconsin 54956 (US)
(74) Representative: Hedges, Martin Nicholas

(57) **Abstract**

A re-sealable package and method of making the same. The package includes a base having a cavity for receiving an article, and a hinged cover for forming a releasable snap fit closure with the base. A plurality of channels are in fluid communication between the cavity and an upper edge of the base. A volume of gas located within the cavity is removed or otherwise altered through the channels prior to sealing the cover to the base. A slot located adjacent the upper edge of the base provides a path for withdrawing or administering a volume of gas during the gaseous modification, and subsequently receives an extruded portion of the cover to form a lip for forming a releasable snap fit closure.

## Description

The present invention relates generally to a package and method of manufacturing the same, for containing consumer products and, more particularly, to a clamshell package that is well suited to contain a product in a modified gaseous environment.

Thermoplastic packaging is a common form of containing and displaying consumer products, including perishable foodstuffs. Conventional packaging often preserves such products in a modified gaseous environment, e.g., vacuum pressure or a non-reactive gas, to prolog shelf-life and delay spoilage. In this regard, thermoplastic packaging often contains a rigid base adhesively bound to a removable film cover. However, with this construction, the package can only be opened once, and does not allow the package to be resealed after opening. As such, the use of an adhesively bound film cover is not ideal for multi-serving products which may not be consumed at a single time.

Alternatively, common two piece containers allow a package to be resealed after it has been initially opened. However, typically such two piece containers do not form an air-tight seal between the rigid base and rigid cover pieces. As such, a removable film is often placed between the rigid base and cover piece during the packaging process to maintain the modified gaseous environment of the package. Only after this inner film is initially removed and discarded may the consumer then reseal the package by directly coupling the cover to the base.

Yet another alternative package is a clamshell package, which often contains a rigid base and cover piece bonded together at a hinge point. As seen in common clamshell containers for perishable foodstuffs such as eggs, berries, and bakery products, the base and cover of the container are often bonded in a linear fashion to form a hinge, allowing the container to be repeatedly opened and closed. However, such containers do not typically possess an air-tight seal capable of maintaining a modified gaseous environment within its interior.

Therefore, there remains a need for an improved package that can effectively contain and display a product in a modified gaseous environment. There also remains a need for a package that can maintain a modified gaseous environment without the additional expense and waste generated from the use of a removable film layer. Further, there remains a need for a hinged container which facilitates repeated opening and closing, and that is also capable of maintaining a modified environment therein, when sealed.

The present invention contemplates a re-sealable package including a base with integrated channels and an external elongated slot, utilized in conjunction, as conduits for modifying the gaseous environment within the package prior to forming a seal with a cover, which overcomes some of the drawbacks generally associated with conventional packaging systems, such as those enumerated above. In one embodiment of the present invention, the re-sealable package includes a base formed of a first web of material having a cavity for receiving an article therein, a plurality of channels in fluid communication between the cavity and an upper perimeter of the base, and an elongated slot located along the upper perimeter, external to the cavity of the package. The channels provide a flow path or conduit for airflow during evacuation of air or a non-reactive gas from within the cavity, when a vacuum pressure is supplied through the underside of the elongated slot, prior to sealing the package with a cover. Once the air or non-reactive gas has been evacuated from within the cavity, i.e, surrounding the article placed therein, the cover, formed of a second web of material, is sealed to the base at a hinge, to allow the cover to rotate about the hinge during opening and closing of the package. Further, a portion of the second web may be extruded or drawn through the elongated slot of the first web to form a lip, capable of creating a snap-fit closure with the base, when the re-sealable package is in the closed configuration.

Accordingly, it is an object of the present invention to provide a package that can maintain a modified gaseous environment between a base and a cover.

It is another object of the present invention to provide a package that can be opened and closed about a hinge, while reforming a seal between the cover and base when in the closed position.

It is a further object of the present invention to provide a package that includes a snap-fit closure between the cover and base, when in the closed position.

A still further object of the present invention is to provide a method of forming a re-sealable package that includes modifying the gaseous environment of the sealed interior cavity of the package by means of at least one channel integrated into the package, and which is sealed by the cover when the package is in the closed position.

Yet another object of the present invention is to provide a method of forming a re-sealable package that includes an elongated slot adjacent a plurality of channels, such that a vacuum force exerted from the underside of a first web may withdraw air from the sealed interior cavity of the package indirectly, by means of at least one channel integrated into the package, where the channel is located adjacent the elongated slot.

yet another object of the present invention is to provide a method of forming a re-sealable package that includes an elongated slot adjacent a plurality of channels, such that a gas pressure exerted from the underside of a first web may force a non-reactive gas into the sealed interior cavity of the package indirectly, by means of at least one channel integrated into the package, where the channel is located adjacent the elongated slot.

Various other features, objects and advantages of the present invention will be made apparent from the following detailed description and the drawings.

The drawings illustrate one representative embodiment presently contemplated for carrying out the invention.
Fig. 1 is an isometric view of a re-sealable package in accordance with the present invention, showing the package in an open orientation;
Fig. 2 is an isometric view of the re-sealable package of Fig. 1 in which the package is shown in a closed orientation;
Fig. 3 is an end elevation view of the re-sealable package of Fig. 1 in which the package is shown in a closed orientation;
Fig. 4 is an isometric view of the re-sealable package of Fig. 1 in which the package is shown in an open orientation;
Fig. 5 is a front elevation view of the re-sealable package of Fig. 1 in which the package is shown in an open orientation;
Fig. 6 is a flow chart depicting a method of manufacturing a re-sealable package in accordance with the present invention;
Fig. 7A is a partial top plan view of a bottom web for forming a re-sealable package in accordance with the present invention, the bottom web containing a plurality of bases therein;
Fig. 7B is a front end elevation view of the bottom web as in Fig. 7A;
Fig. 7 C is a partial side elevation view of the bottom web as in Fig. 7A;
Fig. 7D is a detailed view of a portion of the bottom web taken at section A of Fig. 7A;
Fig. 7E is a section view of a portion of the bottom web taken along line B-B of Fig. 7A;
Fig. 8A is a partial top plan view of a subsequent step in forming the bottom web for forming a re-sealable package in accordance with the present invention;
Fig. 8B is a front end elevation view of the bottom web as in Fig. 8A;
Fig. 8C is a partial side elevation view of the bottom web as in Fig. 8A;
Fig. 8D is a detailed view of a portion of the bottom web taken at section C of Fig. 8A;
Fig. 9A is a partial top plan view of a subsequent step in forming the bottom web and a top web for forming a re-sealable package in accordance with the present invention;
Fig. 9B is a front end elevation view of the bottom and top webs as in Fig. 9A;
Fig. 9C is a partial side elevation view of the bottom and top webs as in Fig. 9A;
Fig. 10A is a partial top plan view of a subsequent step in forming the top web for forming a re-sealable package in accordance with the present invention;
Fig. 10B is a front end elevation view of the bottom and top webs as in Fig. 10A;
Fig. 10C is a partial side elevation view of the bottom and top webs as in Fig. 10A;

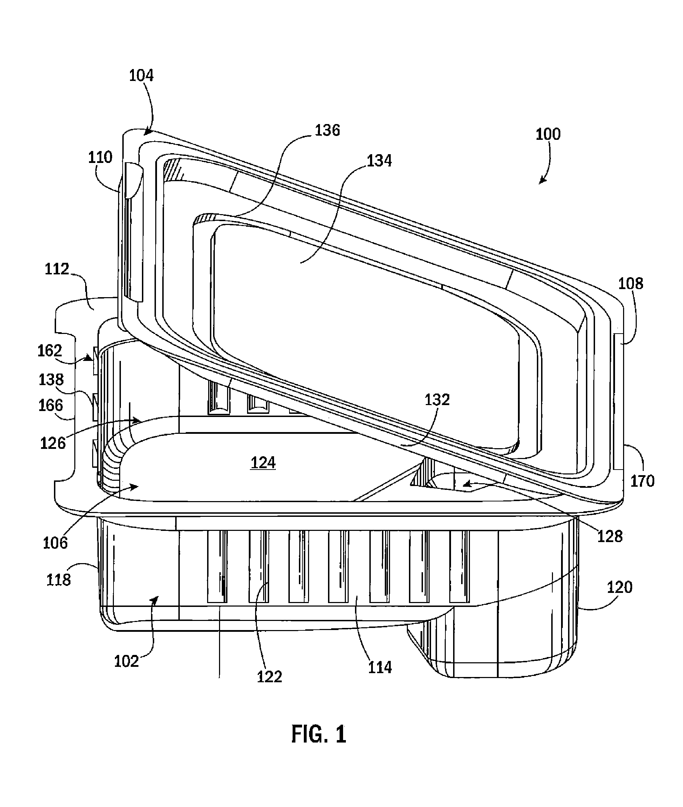

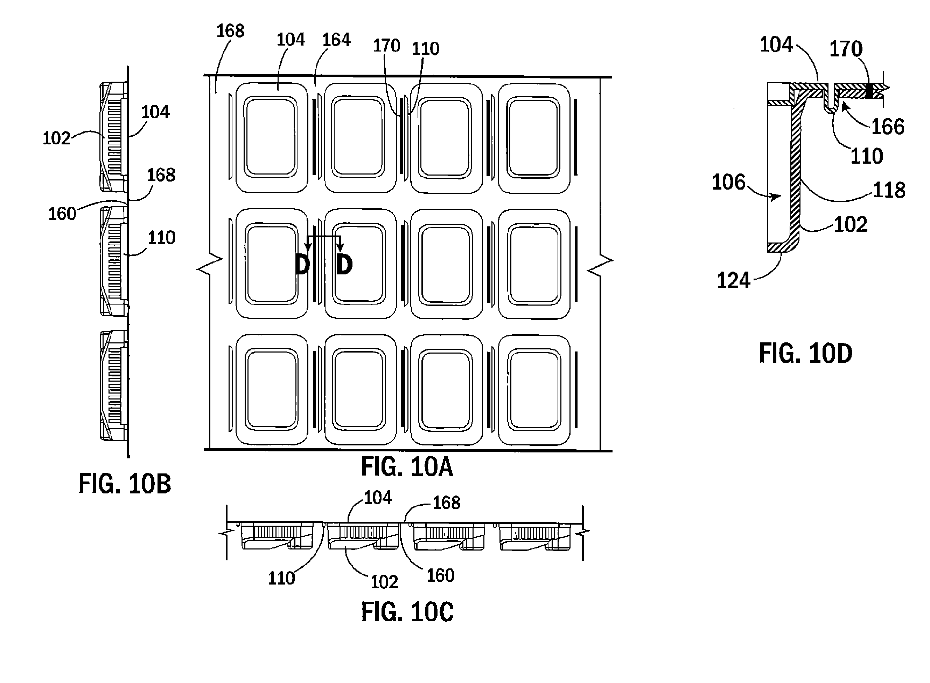

Fig. 1OD is a section view of a portion of the bottom and top webs taken along line D-D of Fig. 10A;

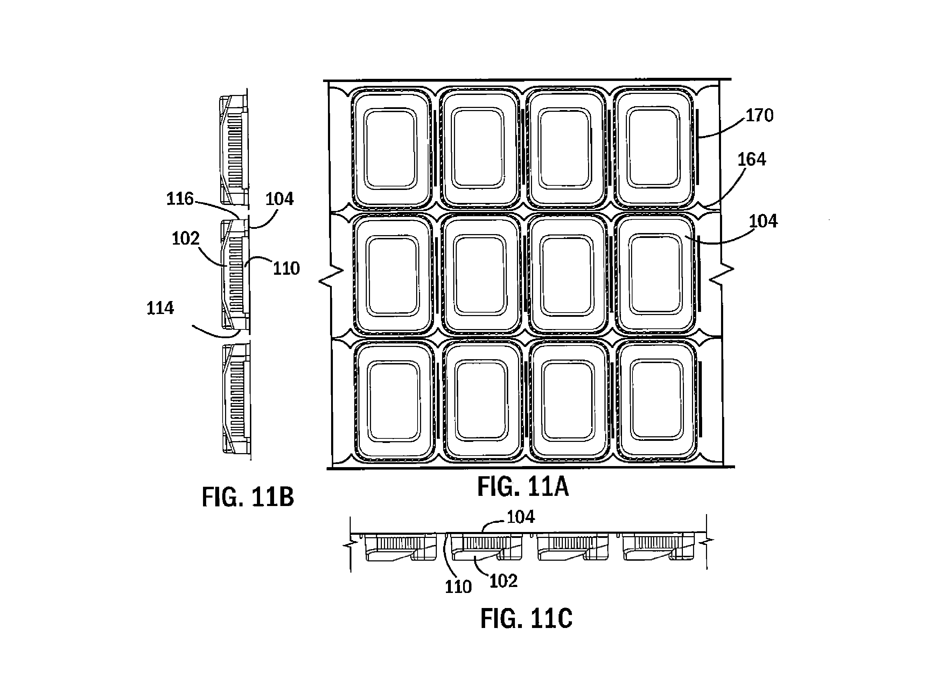

Fig. 11A is a partial top plan view of a subsequent step in forming the top web for forming a re-sealable package in accordance with the present invention;
Fig. 11B is a front end elevation view of the top and bottom webs as in Fig. 11A;
Fig. 11C is a partial side elevation view of the top and bottom webs as in Fig. 11A;

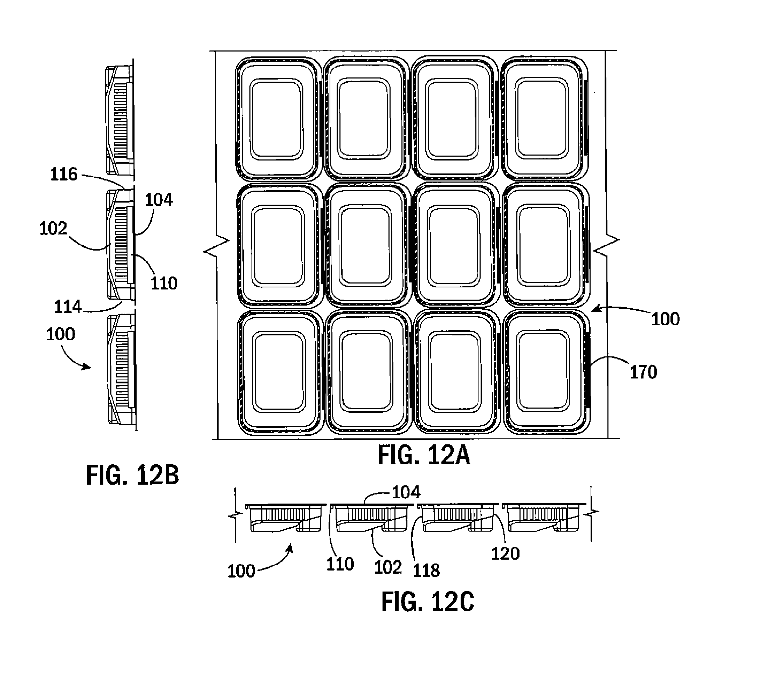

Fig. 12A is a partial top plan view of a subsequent step in forming the top web for forming a re-sealable package in accordance with the present invention;
Fig. 12B is a front end elevation view of the top and bottom webs as in Fig. 12A;
Fig. 12C is a partial side elevation view of the top and bottom webs as in Fig. 12A; and

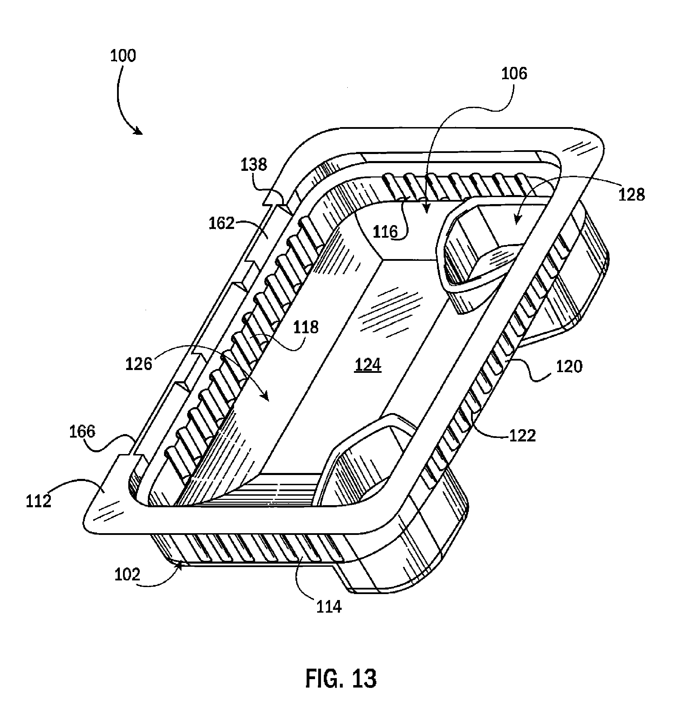

Fig. 13 is an isometric view of the re-sealable package of Fig. 1 in which only the base of the package is shown.

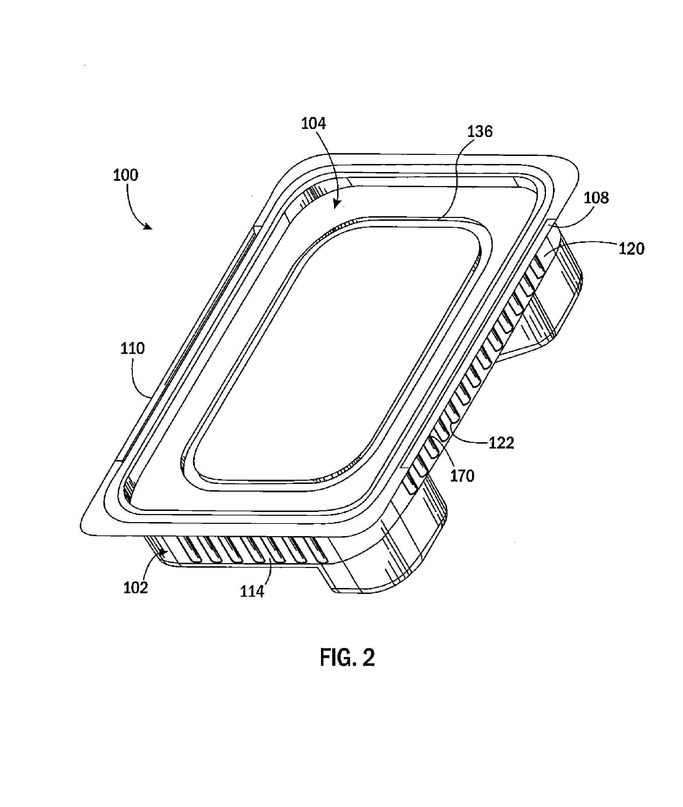

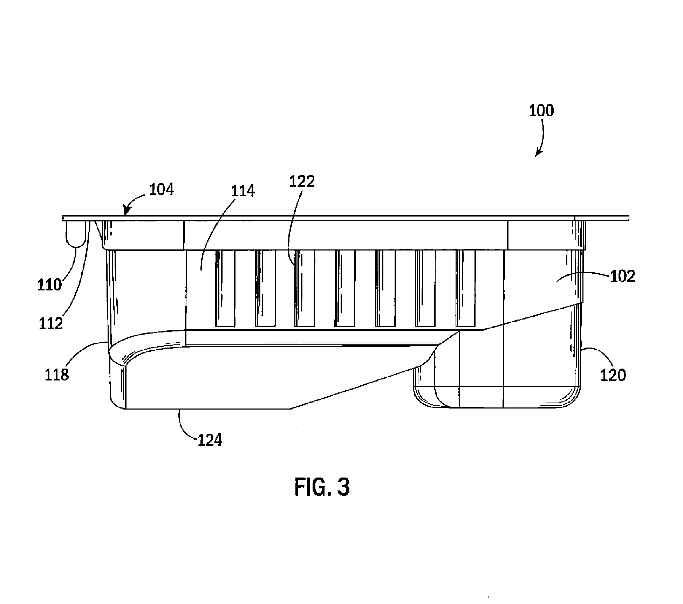

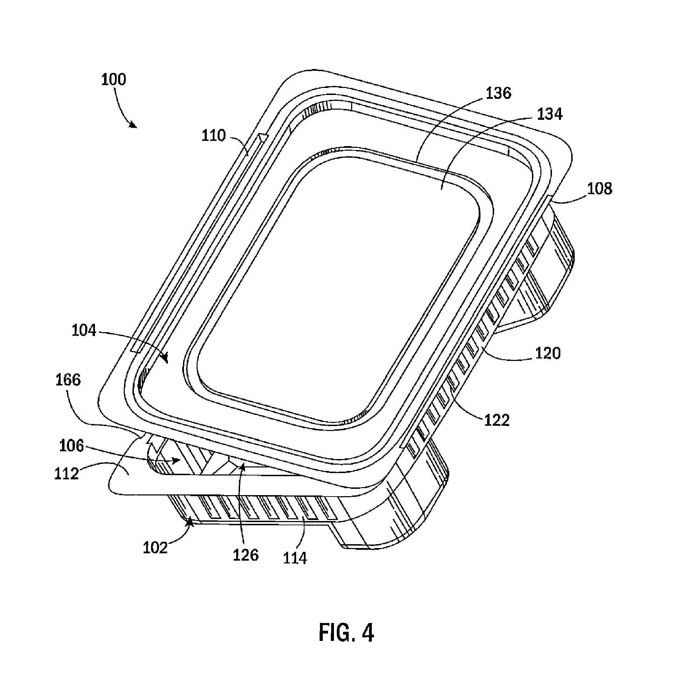

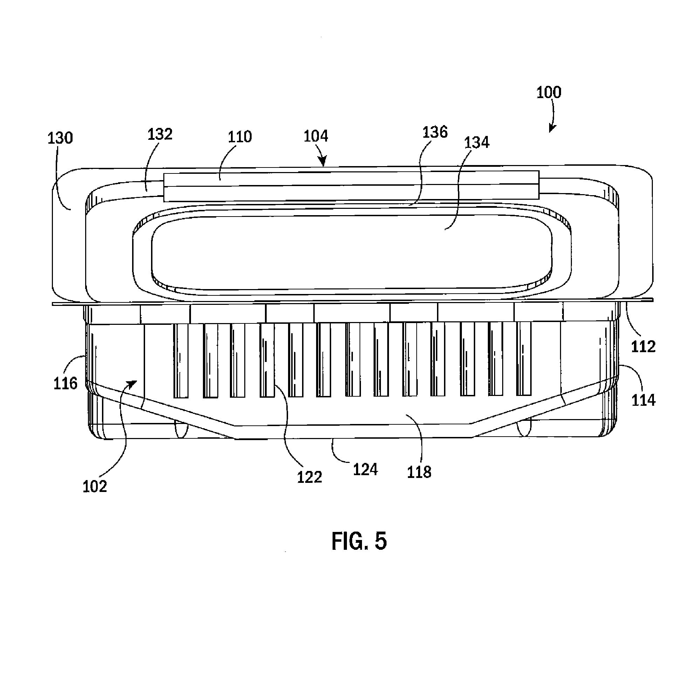

Referring initially to Figs. 1-5 and 13, a clamshell package in accordance with the present invention is shown at 100. The package 100 includes a base 102, a cover 104, and a cavity 106 disposed within base 102 that is adapted to be closed by the cover 104. Base 102 is joined to cover 104 at a hinge 108, located along an edge at the back of the package 100. A lip 110 affixed to an edge at the front of the cover 104 engages the base 102 to form a re-sealable snap fit closure. When lip 110 engages base 102, a seal is formed around package 100. While Fig. 1 illustrates the hinge 108 and the lip 110 located on opposite sides of the package 100, alternative embodiments, such as the hinge 108 and lip 110 being located on adjacent sides of the package, are also considered within the scope of this invention. Further, while Fig. 1 illustrates a package of roughly rectangular cross-section, alternative package configurations are also considered well within the scope of this invention.

As illustrated in Fig. 1, base 102 may be formed to define a first side panel 114 and a second side panel 116, which are interposed between a front panel 118 and a back panel 120. Base 104 further includes a bottom panel 124. Panels 114, 116, 118, 120 extend upwardly from bottom panel 124, and cooperate with bottom panel 124 to define cavity 106. Hinge 108 is located adjacent the upper perimeter of back panel 120, and lip 110 engages base 102 adjacent the upper perimeter of front panel 118. Panels 114, 116, 118, 120 may be formed with a series of groves 122 or alternative textured features for strength and rigidity. Panels 114, 116, 118, 120 may also be curved or tapered, or may have any other configuration as desired. Panels 114, 116, 118, 120 may also be configured to contain or display molded or printed information on their exterior surfaces, such as advertising or nutritional information. Bottom panel 124 of base 102 may also be curved or tapered, and may be formed with multiple compartments 126, 128 within cavity 106. The multiple compartments 126, 128 within the cavity 106 are in communication with each other when the package 100 is in a sealed or closed configuration. Any number, shape, or orientation of the multiple compartments, are considered within the scope of this invention, as may be suited to adequately contain the packaged product within the cavity 106. For example, the multiple compartments 126, 128 may be configured to individually retain distinct portions of a meal in distinct compartments within the cavity 106. Furthermore, separation of distinct portions of the packaged product within distinct compartments may allow a consumer to easily identify the contents thereof.

The upper perimeter of contiguous panels 114, 116, 118, 120 forms an upwardly facing flange 112 about the perimeter of package 100. When in a closed configuration, lip 110 is engaged with base 102 to form a snap-fit closure. When the snap-fit closure has been made, a seal is formed along the entire perimeter of the package, specifically between, the outer perimeter of a bottom surface 130 defined by cover 104 and flange 112 of base 102. More specifically, an outer wall of a recessed channel 132, which is peripherally located along the bottom surface 130 of the cover 104, is configured to mate with the inner wall of base 102, adjacent the flange 112, when the package 100 is in a closed configuration. As such, the package 100 is capable of forming airtight tight seal between base 102 and cover 104, when the package 100 is in a closed configuration and the lip 110 has formed a snap-fit closure with the base 102. During initial manufacture and production, the seal between base 102 and cover 104 may be formed as an airtight seal using conventional multi-layer and heat sealable materials for base 102 and cover 104. This allows package 100 to maintain a modified gaseous environment within the cavity 106. However, when package 100 is in an open configuration, the seal between the outer wall of the recessed channel 132 and inner wall of the base 102 adjacent the flange 112 is broken and lip 110 is disengaged from base 102. A top surface 134 of cover 104 may constitute a substantially planar surface configured to display printed information thereon or to receive a label. Alternatively, top surface 134 may be formed with a depression 136, a series of depressions or alternative textured features thereon.

Lip 110 may be flexible to facilitate flexing and minor deformations as lip 110 engages and disengages base 102 to form the snap fit closure. Particularly, lip 110 engages the base 102 at an elongated slot 166 within flange 112. The elongated slot 166 is configured to receive the lip 110 securely therein, and will be described in further detail below. Furthermore, lip 110 may extend downwardly relative to the plane of cover 104, such that lip 110 extends towards the base 102. This angled orientation of lip 110 thereby requires additional force to open package 100 and release the snap fit closure. As such, the angled lip 110 provides a simple means for locking package 100 in a closed configuration, and preventing accidental or inadvertent opening.

Package 100 is designed to retain a packaged article within cavity 106. In one embodiment, the packaged article may constitute a perishable foodstuff, e.g. sliced meats or cheeses. Furthermore, as noted previously, at initial production the snap fit closure of the present invention and the correlating seal between base 102 and cover 104 is sufficient to retain packaged article under a modified gaseous environment, such as a decreased pressure, i.e. vacuum pressure, within the cavity 106 when the package is in a closed configuration. Alternatively, at initial production the snap fit closure of the present invention and the correlating seal between base 102 and cover 104 is sufficient to retain packaged article under a modified gaseous environment, i.e. a non-reactive gas environment such as nitrogen, within the cavity 106 when the package is in a closed configuration. The modified gaseous environment, whether it be a decreased pressure, presence of a non-reactive gas, or combination thereof, is ideal for packaging perishable foodstuffs to prolong shelf life.

As seen in Fig. 1 and 13, the interior 106 of package 100 includes a plurality of channels 162 integrated into panel 118. The upper ends of these channels 162 are located along the upper perimeter of the base 102, at the flange 112, while the lower end of the channels 162 end within the cavity 106. In one embodiment the channels 162 are slanted or tapered indentations formed within panel 118, such that they are formed of web material along three sides and open to the cavity 106 along the entire length of the channel. In an embodiment the channels may be four sided conduits located within the panel 118, having a top aperture located at the flange 112 and a lower aperture located at the cavity 118. In either embodiment, the channels 162 provide a path for fluid communication between the cavity 106 and flange 112. Particularly, as will be described in further detail below, the channels 162 provide a conduit for removing a gas, i.e. air or a non-reactive gas, from within the cavity during the manufacturing of the package 100. As the multiple compartments 126, 128 that comprise the cavity 106 are all in fluid communication, withdrawing gas through the channels 162 results in the modified gaseous environment within all compartments within the cavity 106. When package 100 is in a closed configuration and sealed during initial production, the outer perimeter of the cover 104 securely abuts against the flange 112, and the upper ends 138 of the channels 162. As such, the channels 162 are sealed at their upper ends 138 when the package 100 is in the closed configuration, and fluid communication therein is entirely blocked. Therefore, the modified gaseous environment is maintained within the package when the package is initially sealed in the closed configuration. As seen in Fig. 1, the channels 162 are located on the same panel 118 of base 102 which is engaged with the lip 110. However, alternative embodiments, including alternative locations, number and size of the channels 162 is considered within the scope of this invention.

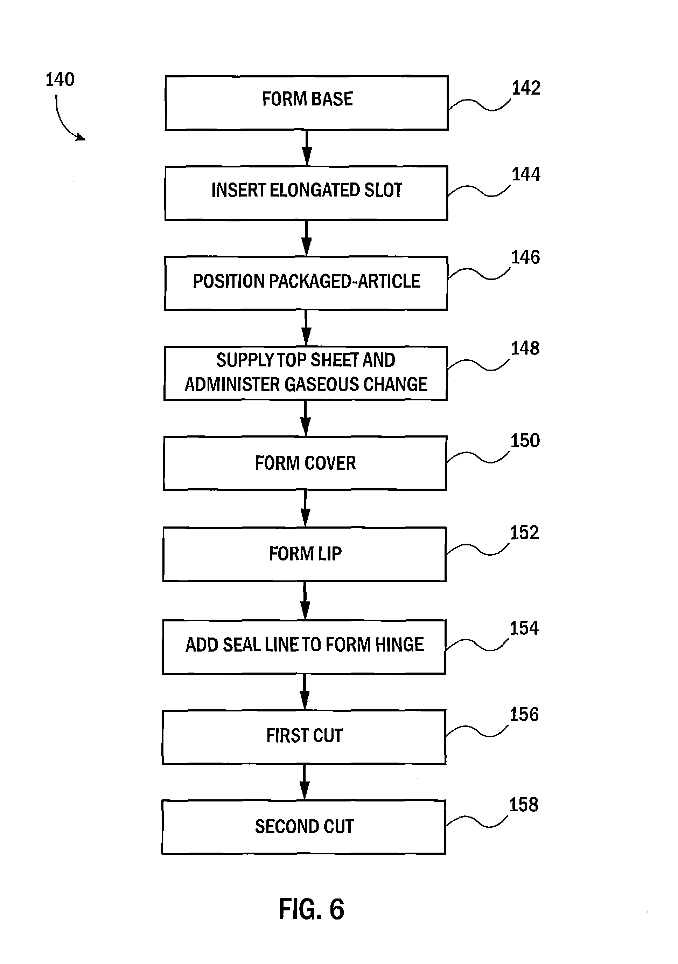

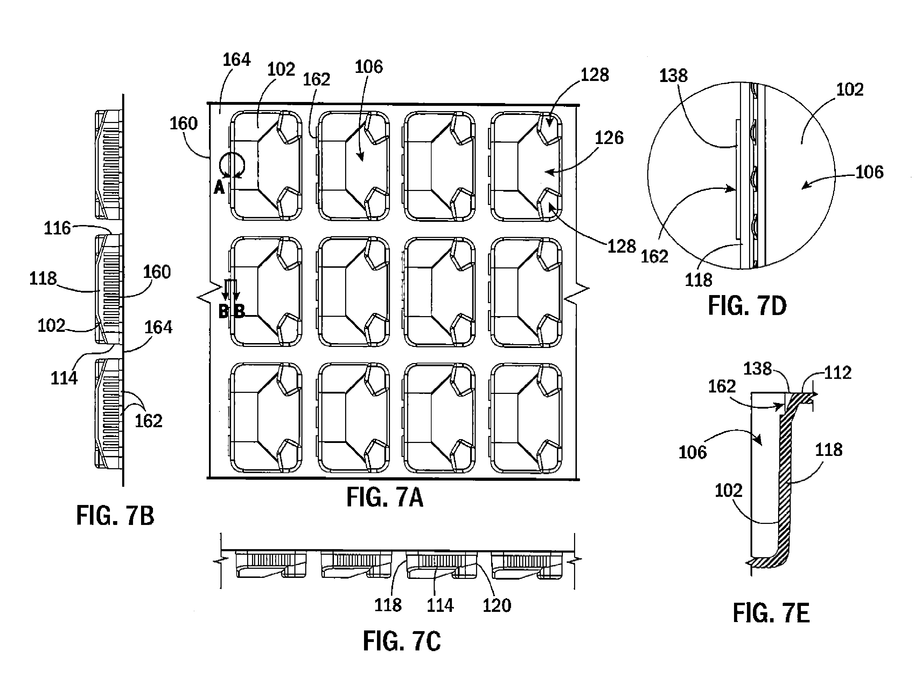

Referring to Fig. 6, flow chart 140 illustrates a method of manufacturing package 100 with a packaged-article contained therein according to one embodiment. The process depicted in flow chart 140 is particularly suited for high production speeds and large volume output along a package production and assembly system as is known in the art. Figs. 7-12 further illustrate select steps identified in flow chart 140, as would be performed in an indexing or continuous package production and assembly system as is known in the art. While the illustrated embodiment described below and illustrated in Figs. 6-12 depicts an order of steps of a method of manufacturing package 100, any alternative ordering of the steps contained herein, which are suitable for manufacturing package 100, is considered within the scope of this invention

Box 142 and Figs. 7A-7E illustrate the first step of forming base 102. A bottom web or sheet of material 160 is supplied to the package assembly system (not shown). The bottom web 160 may be a deformable plastic material that is well suited to be pressed, formed or drawn into various forms, in a manner as is known. As such the resulting bases 102 may be a rigid or semi-rigid plastic. In one embodiment, a plurality of bases 102 is simultaneously formed in bottom web 160. Bases 102 may be formed in bottom web 160 by an application of heat, vacuum or force as is known in the art. Representatively, the bases 102 may be formed in an indexing motion packaging machine that includes a forming station at which a forming tool is moved into contact with the underside of the bottom web 160. At the forming station, the web 160 is subjected to heat and vacuum that forms the web 160 into cavities in the forming tool, each of which corresponds to the final desired to shape of a base 102. In this manner, a number of bases 102 are formed simultaneously. It is understood, however, that the bases may be formed in any other manner, such as on a continuous motion machine. Figs.7A-7C illustrate a section of the bottom web 160 that is formed to provide a plurality of bases 102, configured into three rows of bases 102 each, although it is understood that any alternative quantity and orientation of bases 102 may be formed in bottom web 160. In an alternative embodiment bases 102 may be previously formed in a bottom sheet similar to bottom web 160, prior to supplying the bottom sheet to the package assembly system.

Additionally in the first step, as illustrated in Box 142 and Figs. 7A-7C, each base 102 formed in bottom web 160 includes front and back panel 118, 120, side panels 114, 116, and bottom panel 124, as described in detail above, which cooperate to form cavity 106. Furthermore, each base 102 includes a plurality of channels 162 disposed within the front panel 118. As seen in the detailed view of Fig. 7D, and the cross-section view of Fig. 7E, each channel 162 defines an upper ends 138 integrated onto the upper perimeter of front panel 118 at flange 112 to facilitate gas movement there through, and a slanted or tapered wall formed within panel 118. Each channel 162 further defines a three sided indentation into panel 118, that is open to the cavity 106 along the entire length of the channel.. The channels 162 are adapted to provide fluid communication between the interior of the cavity 106 and flange 112, as previously discussed. Channels 162 thereby define a passage for gases during the process of forming of package 100. The three sided configuration of the channels 162 allows for increased transmission capacity over that of a fully enclosed channel 162, which it turn facilitates rapid movement of gas through the channels 162 during the subsequent gaseous environment modification step. During the forming of bases 102, a negative space 164, i.e. an unaltered portion of bottom web 160, is retained within the bottom web 160 between the plurality of bases 102.

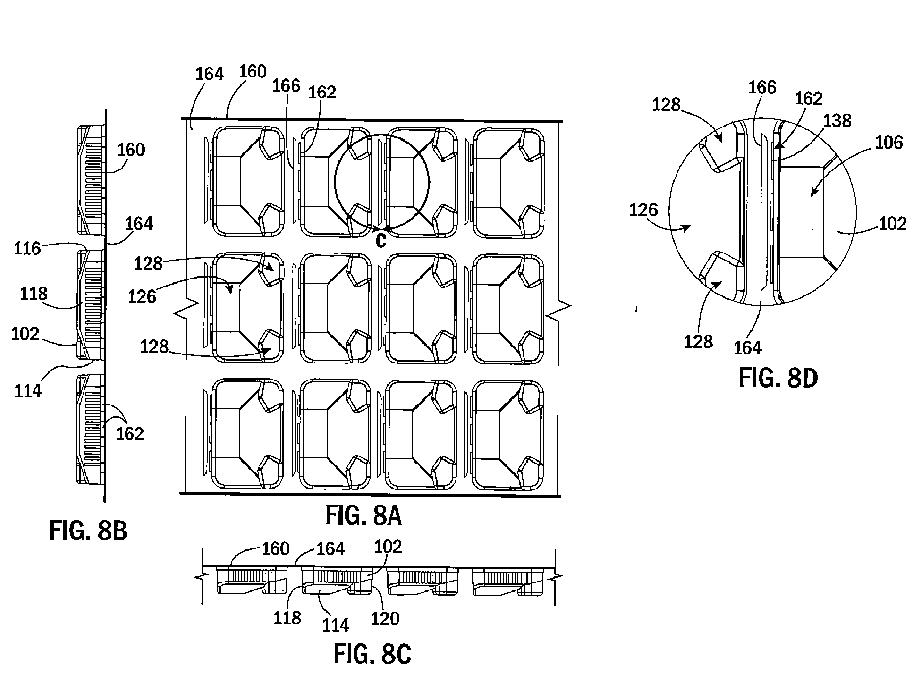

Box 144 and Figs. 8A-8D illustrate a subsequent step wherein an elongated slot 166 is punched in the bottom web 160. The elongated slot 166 is punched into the material of negative space 164 of bottom web 160, and positioned adjacent and parallel to the plurality of channels 162 disposed within the front panel 118. The length of elongated slot 166 may be less than the length of front panel 118. In the illustrated embodiment, the elongated slot 166 is located outwardly within the negative space 164 relative to the location at which the upper openings of channels 162 open onto flange 112. However, the elongated slot 166 may be positioned within the negative space 164 adjacent the flange 112 of the base 102, at a side panel that does not contain channels 162.

Box 146 illustrates a subsequent step in which the packaged article is placed within cavity 106 of the base 102. Representatively, in accordance with the high production speeds and large volume output of the presently illustrated package assembly system, multiple packaged articles may be placed within the cavities 106 simultaneously. As described above, in one embodiment, packaged articles may constitute a perishable foodstuff, e.g. deli meats or cheese. Alternatively, packaged articles may be non-perishable foodstuff, non-foodstuffs, or a combination of multiple discrete elements. In embodiments in which the packaged article consists of multiple discrete elements, the discrete elements may be placed in discrete compartments 126, 128 within cavity 106. Alternatively, multiple discrete elements may be placed into a single compartment within cavity 106.

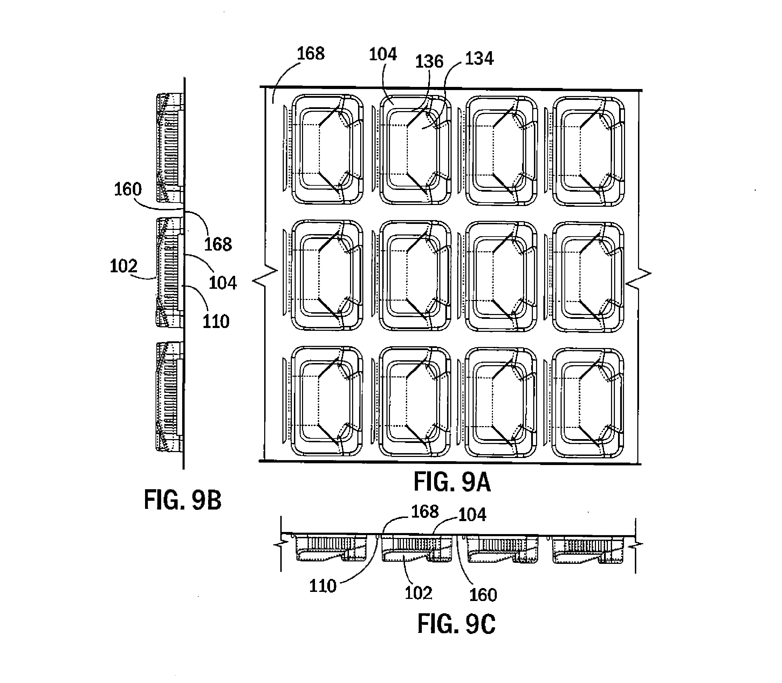

Box 148 and Figs. 9A-9C illustrate a subsequent step wherein a top sheet or web 168 is supplied to the package assembly system (not shown), such that top web 168 overlies bottom web 160. Top web 168 may be a plastic configured to be pressed or otherwise manipulated into various shapes or forms. After top web 168 has been placed over bottom web 160, the cavities 106 of the plurality of bases 102 may be subjected to an evacuation process or a gas-flush atmosphere modification process, in a manner as was previously discussed. In the evacuation process, the atmospheric pressure within the cavities 106 is lowered by means of withdrawing air through the plurality of channels 162, to create a vacuum within cavities 106. In a gas flush process, the air present in cavities 106 is replaced with an inert or non-reactive gas. During the gas flush, the air present in the cavities 106 is expelled by means of the plurality of channels 162 and replaced by a non-reactive gas. Alternatively, a non-reactive gas may be introduced into the cavity prior to lowering the atmospheric pressure according to the method previously discussed. The non-reactive gas retards spoilage of the packaged article, e.g. using nitrogen or any such non-reactive gas as is known in the art. In either process, the channels 162 provide rapid flow of air or gas into or out of the cavities 106.

During the gaseous environment modification, the elongated slots 166 cooperate with the channels 162 to provide a high volume flow path for air or gas into or out of cavities 106 when top web 168 is placed over bottom web 160. During an evacuation process a vacuum is applied from the underside of the bottom web 160; as a result, gas contained within each cavity 106 is drawn into and through the channels 162, exiting the channels 162 at the upper ends 138, and subsequently through the elongated slot 166 adjacent the channels 162. During the gas flush process a volume of gas is supplied from the underside of the bottom web 160; resultantly the channels 162 and adjacent slot 166 provide a flow path that enables air contained within the cavity 106 to be quickly exchanged with the inert gas, as the inert gas enters the cavity 106. This high volume flow path provided by the channels 162 and adjacent elongated slot 166 allows the package-forming equipment to be run at much higher speeds than previously possible using conventional package configurations.

Box 150 and Figs. 9A-9C further illustrate a step wherein the top web 168 is bonded to the bottom web 160. The top web 168 defines a plurality of covers 104, which correspond to the location and orientation of the plurality of bases 102 in the bottom web 160. The top web 168 is formed such that the recessed channel 132 peripherally located along bottom surface 130 of each of the plurality of covers 104 is configured to mate with the corresponding flange 112 of each of the plurality of bases 102. The covers 104 and bases 102 are sealed together, in a known manner, to preserve the gas environment of cavities 106 following the evacuation or atmosphere modification process illustrated in box 148. During the step of sealing the covers 104 and bases 102, the seal is formed in part by covering the upper ends 138 of the plurality of channels 162 with the recessed channel 132 of the cover 104, such that the recessed channel 132 overlaps and is bonded to the flange 112 adjacent each channel 162. In an alternative embodiment, covers 104 may be previously formed in top sheet 168, prior to supplying top sheet 168 to the package assembly system.

Box 152 and Figs. 9A-9C further illustrate a step wherein a portion of top web 168 is advanced through the elongated slot 166 in bottom web 160 after the bottom web 160 and top web 168 have been sealed together to form each package 100. This advancement of the portion of top web 168 through the slot 166 functions to form lip 110. In one embodiment, lip 110 may be in the form of a curved segment of top web 168 having an outer edge formed to fit tightly within the elongated slot 166. Lip 110 is movably independent of bottom web 160. Lip 110 may be formed by forcing a portion of top web 168 through elongated slot 166 in bottom web 160 by means of heat, pressure, mechanical force, an air blast, any combination thereof, or any alternative technique known in the art. In one embodiment, the formation of lip 110 may occur concurrently with the formation of a seal line 170, as previously illustrated in Box 152.

Box 154 and Figs. 10A-10C illustrate a subsequent step wherein seal line 170 is formed between top web 168 and bottom web 160. The seal line 170 is located in the negative space 164, and is positioned parallel to back panel 120, adjacent the upper perimeter of the base 102. Seal line 170 is configured to act as hinge 108 between base 102 and cover 104 for each package 100. Accordingly, hinge 108 provides pivoting movement of cover 104 relative base 102 around the seal line 170. Furthermore, the hinge 108 maintains the relative position of base 102 to cover 104, such that the cover 104 may be repeatedly moved relative to base 102 between an open position and a closed position. The seal line 170 may be formed by means of heat, adhesive, pressure, ultrasonic bonding, any combination thereof, or any alternative bonding technique known in the art. The seal line 170 is formed so as to destroy any peelable layers on bottom web 160 and/or top web 168, in order to ensure that seal line 170 defines the hinge 108 when the package 100 is opened. In this manner, when a user first opens the package 100, any peelable layers between base 102 and cover 104 allow the user to separate base 102 and cover 104 other than at the hinge 108 formed by seal line 170, to access the contents of package 100.

Box 156 and Figs. 11A-11C illustrate a removal of the material of negative space 164 from top web 168 and bottom web 160 adjacent the side panel 114 and side panel 116 of adjacent packages 100 and adjacent the corner areas of the packages 100. The removal of material in this step renders the packages 100 detached from those packages nearest the side panels 114, 116, while remaining attached to those packages 100 nearest front and back panels 118, 120. This removal of material from top web 168 and bottom web 160 may occur by mechanical pressure, die cutting, heat, any combination thereof, or any alternative technique known in the art.

Box 158 and Fig. 12A-12C illustrate transverse separation of top web 168 and bottom web 160 between seal line 170 and lip 110 of adjacent packages 100. The separation of top web 168 and bottom web 160 in this step occurs in a direction substantially perpendicular to the removal of material discussed in the preceding step above, and depicted in Box 156. In this step, the separation extends along the side of the elongated slot 166 furthest from front panel 118 of base 102, which effectively removes one of the edges that defines slot 166. In this manner, lip 110 remains intact and capable of forming a snap fit closure with the three remaining edges of elongated slot 166. The separation in this step renders the packages 100 entirely independent of one another. Alternatively, the order of steps illustrated in Boxes 156,158 may be reversed, or the steps illustrated in Boxes 156, 158 may occur concurrently. The separation carried out in this step may occur by mechanical pressure, cutting, heat, any combination thereof, or any alternative technique known in the art.

It can thus be appreciated that the package 100 having a snap fit closure, and the method of forming same provides a packaging system for high speed and high volume production. Furthermore, the present invention provides a clamshell package 100 having a snap fit closure, suited for preserving a packaged article therein.

While the package 100 and method of forming same have been shown and described with respect to a specific embodiment, it is contemplated that certain details may vary from the specific embodiment as disclosed, while still falling within the scope of the present invention.

Various alternatives and embodiments are contemplated as being within the scope of the following claims, which particularly point out and distinctly claim the subject matter regarded as the invention.

## Claims

1. A re-sealable package, comprising:
a base having a cavity configured to receive an article therein, and a plurality of channels in fluid communication between the cavity and an upper perimeter of the base;
a cover engaging the upper perimeter of the base;
a hinge adjacent a side of the upper perimeter, the hinge pivotally coupling the base and the cover; and
a seal at the upper perimeter between the base and the cover, wherein the seal prevents fluid communication through the plurality of channels.

2. A re-sealable package of claim 1, wherein the cover further comprises:
a depression operative to engage an inner surface of the upper perimeter of the base; and
a peripheral flange operative to engage the channels at the upper perimeter of the base.

3. A re-sealable package of claim 1 wherein the hinge is located at a first side of the upper perimeter and wherein the channels are located at a second side of the upper perimeter that is opposite the first side of the upper perimeter.

4. A re-sealable package of claim 1 further comprising an air-tight seal between the base and cover; and preferably having one of a negative pressure sealed within the cavity and a non-reactive gas sealed within the cavity.

5. A re-sealable package of claim 1 wherein the base and cover are molded plastic; or wherein the hinge is located at a first side of the upper perimeter and further comprising a lip affixed to the cover at a second side of the upper perimeter opposite the first side, the lip configured to releasably engage an edge of the base to form a snap fit closure, the lip preferably comprising a protrusion of the cover, wherein the protrusion is formed by extending a portion of the cover through a slot formed in a web of material from which the base is formed, and subsequently removing a portion of the web of material defining the slot so as to form the edge of the base with which the lip is releasably engaged.

6. A re-sealable package, comprising:
a base having a cavity configured to receive an article therein and an upper perimeter, wherein the base includes an outer edge extending along a first side of the upper perimeter of the base;
a cover engaging the upper perimeter of the base, the cover having a lip, wherein the lip engages the outer edge of the base to maintain the cover in a closed position over the cavity;
a hinge adjacent a second side of the upper perimeter, the hinge pivotally coupling the base and the cover.

7. A re-sealable package of claim 1 or 6, wherein the cavity comprises a plurality of compartments in fluid communication.

8. A re-sealable package of claim 6, wherein the first side of the upper perimeter is opposite the second side of the upper perimeter, or further comprising a seal between the base and cover.

9. A re-sealable package of claim 6 wherein the lip comprises a protrusion of the cover, wherein the protrusion is formed by extending a portion of the cover through a slot formed in a web of material from which the base is formed, and subsequently removing a portion of the web of material defining the slot so as to form the outer edge of the base; or further comprising a plurality of channels in fluid communication between the cavity and the upper perimeter of the base, and preferably comprising a seal between the cover and the base that prevents fluid communication through the plurality of channels.

10. A re-sealable package of claim 1 or claim 6 wherein the channels are disposed within a panel of the base.

11. A method of manufacturing a re-sealable package, the method comprising:
molding a base in a first formable web, the base comprising a base cavity and an upper perimeter;
removing a portion of the first formable web to form an elongated slot at a first side of the upper perimeter of the base;
receiving a second formable web above the first formable web;
molding a cover in the second formable web for engagement with the base, wherein the cover comprises a sealing surface for engagement with the upper perimeter of the base;
forming a hinge between the first formable web and the second formable web at a second side of the upper perimeter of the base;
extruding a portion of the second formable web through the elongated slot to form a lip releasably engaging the elongated slot; and
separating the first and second formable webs about a periphery of the re-sealable package.

12. A method of claim 11, further comprising forming a seal between the cover and the base.

13. A method of claim 11, wherein the step of separating the first and second webs is carried out so as to remove a portion of the web that defines the slot so as to form an outer edge, wherein the lip cooperates with the outer edge to form a snap-fit closure.; or wherein the second side of the upper perimeter of the base is located opposite the first side the upper perimeter of the base.

14. A method of claim 11, wherein forming the cover further comprises forming a depression in cover, wherein an outer surface of the depression engages an inner surface of the upper perimeter of the base; or wherein the step of separating the first and second formable webs comprises trimming the first and second formable webs at an outer edge of the hinge.

15. A method of claim 11, further comprising forming a plurality of channels in the base, the channels providing fluid communication between a base cavity and the first side of an upper perimeter of the base; and in particular including forming a releasable seal engaging the upper perimeter of the base, the releasable seal preventing fluid communication through the plurality of channels.
